# EUROPEAN PATENT APPLICATION

(11) **EP 3 671 996 A1**
(43) Date of publication of application: **24.06.2020**
(21) Application number: 18215254.6
(22) Date of filing: 21.12.2018
(51) Int. Cl.: H02B 13/045

(54) **MEDIUM VOLTAGE GAS INSULATED SWITCHGEAR, METHOD FOR MANUFACTURE, AND USE OF THE SAME IN SWITCHGEARS**

(71) Applicant: ABB Schweiz AG, 5400 Baden (CH)
(72) Inventor: Gentsch, Dietmar, 40882 Ratingen (DE); Fußbahn, Olaf, 40885 Ratingen (DE); Reuber, Christian, 47877 Willich (DE)
(74) Representative: Maiwald Patent- und Rechtsanwaltsgesellschaft mbH

(57) **Abstract**

The present invention relates to a medium voltage gas insulated switchgear with several compartments, wherein a pressure and gastight compartment, containing the vacuum-interrupters. The aforesaid pressure and gastight compartment is made of several metal sheets (10, 20, 30, 110, 120, 130, 140, 150, 160, 310, 320, 330, 340, 350, 360, 410, 420, 430, 440, 450, 460). The metal sheets are provided with overlapping areas at the edges (35), at which the several metal sheet are connected together, in such, that the concerning overlapping areas fits complementarily together.

## Description

### FIELD OF THE INVENTION

The present invention relates to a medium voltage gas insulated switchgear with several compartments, a method of forming a compartment for a medium voltage gas insulated switchgear, a circuit breaker module for a medium voltage gas insulated switchgear, and a method of manufacturing a circuit breaker for a medium voltage gas insulated switchgear.

### BACKGROUND OF THE INVENTION

Medium voltage (MV) gas insulated switchgear (GIS) cubicles or compartments often consist of several pieces of sheet metal that are welded to each other to form a gastight compartment. Then, components are placed inside the compartment, such as circuit breaker (CB) and busbars, with these being installed through one or more openings in the compartment. The assembly inside of an already welded compartment is difficult, as the walls of the compartment restrain the free access to the assembly points. On the other hand, if the welding is done after the assembly of the inner components, the components are exposed to the hot gases and metallic particles that are generated due to the welding process, and therefore pre-welding is necessary.

There is need to provide an improved way of facilitating the manufacturing of MV-GIS.

### SUMMARY OF THE INVENTION

Therefore, it would be advantageous to have an improved means of facilitating the manufacturing of MV-GIS.

The object of the present invention is solved with the subject matter of the independent claims, wherein further embodiments are incorporated in the dependent claims.

In this manner, welding of the compartment put together following the above described principles being applied to the other metal sheets forming the compartment can be carried out after the installation of components internally within the compartment. This is because due to the overlapping metal sheets forming the compartment the internal components are protected from hot gases and metallic particles generated during welding.

Advantageously, the benefits provided by any of the above aspects equally apply to all of the other aspects and vice versa.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Fig. 1 shows a schematic example of a compartment for a medium voltage gas insulated switchgear with several compartments;
Fig. 2 shows a method of forming a compartment for a medium voltage gas insulated switchgear with several compartments,
Fig. 3 shows a circuit breaker module for a medium voltage gas insulated switchgear with several compartments,
Fig. 4 shows a method of manufacturing a circuit breaker for a medium voltage gas insulated switchgear with several compartments; and
Figs. 5-20 show steps in the general assembly procedure of a compartment for a medium voltage gas insulated switchgear with several compartments, and for a circuit breaker module for a medium voltage gas insulated switchgear with several compartments.

### DETAILED DESCRIPTION OF EMBODIMENTS

Described here is a medium voltage gas insulated switchgear with several compartments. A pressure and gastight compartment contains the vacuum-interrupters. The pressure and gastight compartment is made of several metal sheets 10, 20, 30, 110, 120, 130, 140, 150, 160, 310, 320, 330, 340, 350, 360, 410, 420, 430, 440, 450, 460. The reference numbers here relate to possible different variations of compartments, and the compartment is made from 6 metal sheets. The metal sheets that form the pressure and gastight compartment are provided with overlapping areas at the edges 35, at which the several metal sheet are connected together. This is done in a manner such that the concerning overlapping areas fit complementarily together.

In an example, of the medium voltage gas insulated switchgear, the metal sheets of the pressure and gastight compartment are provided in the aforesaid complementary overlapping areas with furthermore complementary fixation means 311, 312, 322, 412, 421, 422.
In an example, of the medium voltage gas insulated switchgear, the metal sheets of the pressure and gastight compartment are welded together 70, in order to result a gastight compartment.

In an example, of the medium voltage gas insulated switchgear, the metal sheets of the pressure and gastight compartment are structured 3-dimensionally at the edges.

In an example, of the medium voltage gas insulated switchgear, the metal sheets of the pressure and gastight compartment are pre-manufactured by hydroforming.

In an example, of the medium voltage gas insulated switchgear, at least one of the metal sheets of the pressure and gastight compartment are provided with 3-dimensional linear, and/or bent lined or circular and/or corrugated lined integral structure for stiffening.

Also described here is a method for manufacturing a gas and pressure tight compartment for a medium voltage gas insulated switchgear with several compartments. The gas and pressure tight compartment contains the vacuum-interrupters. The method comprises assembling first metal sheets, wherein the metal sheets are provided with overlapping areas at the edges (35). In this manner the first metal sheets are connected together, in such, that the concerning overlapping areas fits complementarily together. The method also comprises installing the vacuum interrupters and the bushings, and then assembling the last metal sheets, and welding the metal sheets together to form the gas and pressure tight compartment.

The gas and pressure tight compartment, manufactured by the above method can then be used in a medium voltage gas insulated switchgear.

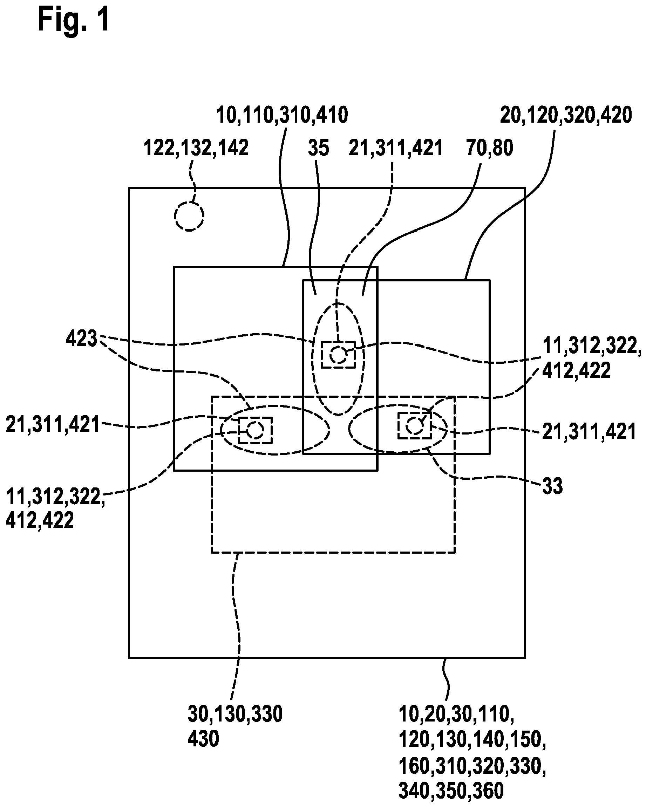

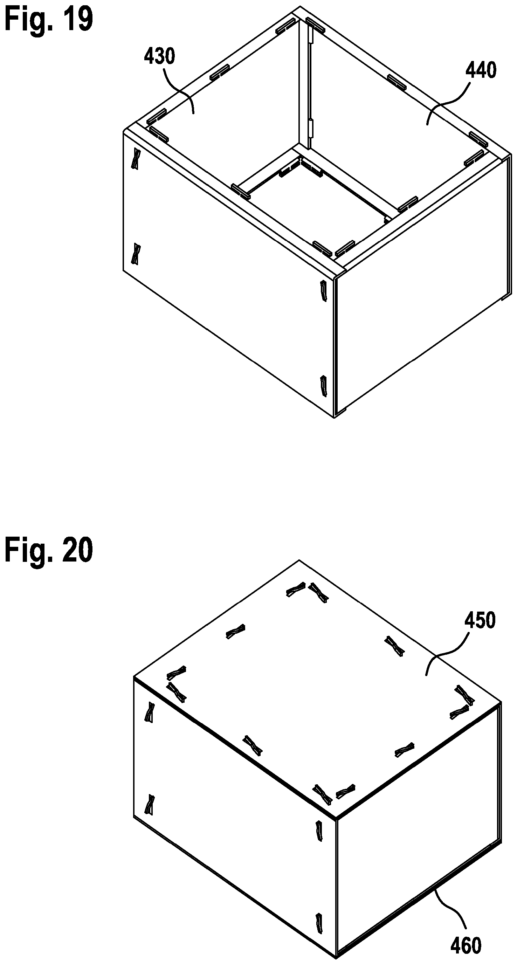

The gas and pressure tight compartment are now described in further detail with respect to Figs. 1-20.

Fig. 1 shows an example of a compartment for a medium voltage gas insulated switchgear. The compartment is gas and pressure tight and is one of the compartments of the medium voltage gas insulated switchgear. The compartment can come in a number of different forms, here represented by the reference numbers 1, 100, 300 and 400. The compartment comprises a plurality of metal sheets. Six metal sheets for example can be used to form the outer walls of the compartment. The reference numbers for the metal sheets that can form the different forms of the compartment, are here represented by the reference numbers 10, 20, 30, 110, 120, 130, 140, 150, 160, 310, 320, 330, 340, 350, 360, 410, 420, 430, 440, 450, 460. The plurality of metal sheets form the outer walls of the compartment. At least a part of a periphery of a first side of a first metal sheet, which for the different compartments have associated reference numbers, 10, 110, 310, 410 , of the plurality of metal sheets and at least a part of a periphery of a first side of a second metal sheet, which for the different compartments have associated reference numbers, 20, 120, 320, 420 of the plurality of metal sheets overlay one another such that an overlapping area 35 is provided at a transition between the first metal sheet and the second metal sheet.

According to an example, the at least part of the periphery of the first side of the first metal sheet overlays the at least part of the periphery of the first side of the second metal sheet.

According to an example, the at least part of the periphery of the first side of the first metal sheet comprises at least one hole, which for the different embodiments are represented by reference numbers 21, 311, 421. The at least part of the periphery of the first side of the second metal sheet comprises at least one protrusion, which for the different embodiments are represented by reference numbers 11, 312, 322, 412, 422.

According to an example, the at least one protrusion comprises at least one guidance pin 11, and the at least one hole comprises at least one cut-out 21.

In this manner at least one cut-out is provided into which the associated at least one guidance pin of an adjoining metal sheet can be located to aid assembly.

According to an example, the at least one protrusion comprises at least one bendable locking feature, which for the different embodiments are represented by reference numbers 312, 322, 412, 422. And the at least one hole comprises at least one slit, which for the different embodiments are represented by reference numbers 311, 421.

In this manner, the plurality of metal sheets can be fixed together through insertion of at least one bendable locking feature through the at least one slit of an adjoining metal sheet and bending of the at least one bendable locking feature.

According to an example, at least a part of a periphery of a first side of a third metal sheet, which for the different embodiments are represented by reference numbers 30, 130, 330, 430, of the plurality of metal sheets and at least a part of a periphery of a second side of the second metal sheet of the plurality of metal sheets overlay one another. In this way an overlapping area is provided at a transition between the second metal sheet and the third metal sheet.

According to an example, the at least part of the periphery of the first side of the third metal sheet overlays the at least a part of the periphery of the second side of the second metal sheet.

According to an example, the at least part of the periphery of the first side of the third metal sheet comprises at least one hole, which for the different embodiments are represented by reference numbers 21, 311, 421. And the at least part of the periphery of the second side of the second metal sheet comprises at least one protrusion, which for the different embodiments are represented by reference numbers 11, 312, 322, 412, 422.

In an example, the at least one protrusion comprises at least one guidance pin 11, and the at least one hole comprises at least one cut-out 21.

In this manner at least one cut-out is provided into which associated at least one guidance pin of an adjoining metal sheet can be located to aid assembly.

In an example, the at least one protrusion comprises at least one bendable locking feature, which for the different embodiments are represented by reference numbers 312, 322, 412, 422. And the at least one hole comprises at least one slit, which for the different embodiments are represented by reference number 311, 421.

In this manner, the plurality of metal sheets can be fixed together through insertion of at least one bendable locking feature through the at least one slit of an adjoining metal sheet and bending of the at least one bendable locking feature.

According to an example, at least a part of a periphery of a second side of the first metal sheet and at least a part of a periphery of a second side of the third metal sheet overlay one another such that an overlapping area is provided at a transition between the first metal sheet and the third metal sheet.

According to an example, the at least part of the periphery of the second side of the first metal sheet overlays the at least part of the periphery of the second side of the third metal sheet.

According to an example, the at least part of the periphery of the second side of the first metal sheet comprises at least one hole, which for the different embodiments are represented by reference numbers 21, 311, 421. And the at least part of the periphery of the second side of the third metal sheet comprises at least one protrusion, which for the different embodiments are represented by reference numbers 11, 312, 322, 412, 422.

In an example, the at least one protrusion comprises at least one guidance pin 11, and wherein the at least one hole comprises at least one cut-out 21.

In this manner at least one cut-out is provided into which associated at least one guidance pin of an adjoining metal sheet can be located to aid assembly.

In an example, the at least one protrusion comprises at least one bendable locking feature, which for the different embodiments are represented by reference numbers 312, 322, 412, 422. And wherein the at least one hole comprises at least one slit, which for the different embodiments are represented by reference number 311, 421.

In this manner, the plurality of metal sheets can be fixed together through insertion of at least one bendable locking feature through the at least one slit of an adjoining metal sheet and bending of the at least one bendable locking feature.

According to an example, the at least part of the periphery of the second side of the third metal sheet is shaped with an indentation 33.

By having an indentation for the third metal sheet, an outer surface of the third metal sheet can lay tangentially on the inner surface of the first metal sheet, thereby providing a compartment that can be welded to form a gas tight seal at the transition between sheets.

According to an example, at least one periphery of the second metal sheet overlaid by a periphery of first metal sheet and/or overlaid by a periphery of the third metal sheet comprises a bended step region 423.

In an example, the compartment comprises fourth 140, 340, 440, fifth 150, 350, 450 and sixth metal sheets 160, 360, 460, where the different reference numbers relate to different embodiments. The fourth, fifth and sixth metal sheets that are arranged one to the other according to any of the examples described above applying to the first, second and third metal sheets. Furthermore, the first, second and third metal sheets are arranged with corresponding ones of the fourth, fifth and sixth metal sheets according to any of the examples described above.

According to an example, fixation of the plurality of metal sheets one to the other comprises at least one welded spot 80 at the transition between adjoining metal sheets.

According to an example, rendering the compartment gas tight comprises application of a welded line 70 along the transition between adjoining metal sheets.

According to an example, at least one of the plurality of metal sheets comprises at least one opening 122, 132, 142.

In this manner, components can be inserted through the openings to use the compartment to make for example a circuit breaker (CB) module. The compartment can then be welded after installation.

According to an example, compartment 100 has one metal sheet that comprises one opening 122 and another metal sheet comprises three openings 132 and a further metal sheet comprises three openings 142.

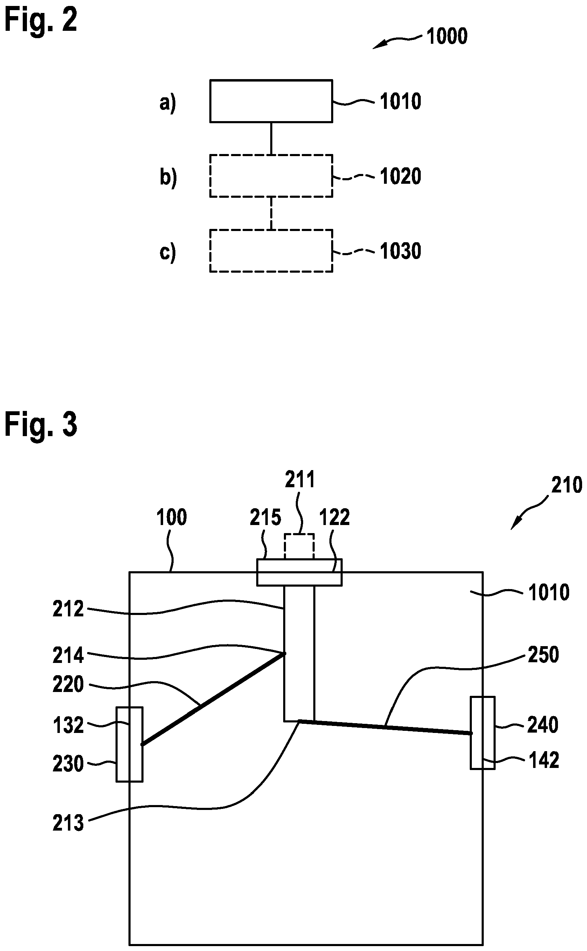

Fig. 2 shows a method 1000 of forming a compartment for a medium voltage gas insulated switchgear in its basic steps. The compartment is gas and pressure tight and is one of the compartments of the medium voltage gas insulated switchgear. The compartment can come in a number of varying forms denoted by reference numbers 1, 100, 300 and 400. A plurality of metal sheets form outer walls of the compartment. For the different forms of compartment, associated different metal plates are represented by the following reference numbers 10, 20, 30, 110, 120, 130, 140, 150, 160, 310, 320, 330, 340, 350, 360, 410, 420, 430, 440, 450, 460 and where for example six metal plates can be used to form the outer walls of a compartment. The method comprises:
in an overlaying step 1010, also referred to as step a), overlaying at least a part of a periphery of a first side of a first metal sheet of the plurality of metal sheets and at least a part of a periphery of a first side of a second metal sheet of the plurality of metal sheets with one another to provide an overlapping area 35 at a transition between the first metal sheet and the second metal sheet. For the different embodiments, the first metal sheet is represented by the reference numbers 10, 110, 310, 410 and the second metal sheet by the reference numbers 20, 120, 320, 420.

According to an example, step a) comprises overlaying the at least part of the periphery of the first side of the first metal sheet over the at least part of the periphery of the first side of the second metal sheet.

In an example, the at least part of the periphery of the first side of the first metal sheet comprises at least one hole and the at least part of the periphery of the first side of the second metal sheet comprises at least one protrusion. For the different embodiments, the at least one hole is represented by the reference numbers 21, 311, 421 and the at least one protrusion by the reference numbers 11, 312, 322, 412, 422.

In an example, the at least one protrusion comprises at least one guidance pin 11, and the at least one hole comprises at least one cut-out 21.

In an example, step a) comprises locating the at least one guidance pin 11 in the at least one cut-out 21.

In an example, the at least one protrusion comprises at least one bendable locking feature, and wherein the at least one hole comprises at least one slit. For the different embodiments, the at least one bendable locking feature is represented by the reference numbers 312, 322, 412, 422 and the at least one slit by the reference numbers 311, 421.

In an example, step a) comprises inserting the at least one bendable locking feature through the at least one slit followed by bending the at least one bendable locking feature.

According to an example, the method comprises in overlaying step 1020, also referred to as step b), overlaying at least a part of a periphery of a first side of a third metal sheet of the plurality of metal sheets and at least a part of a periphery of a second side of the second metal sheet of the plurality of metal sheets with one another to provide an overlapping area at a transition between the second metal sheet and the third metal sheet. For the different embodiments, the third metal sheet is represented by the reference numbers 30, 130, 330, 430.

According to an example, step b) comprises overlaying the at least part of the periphery of the first side of the third metal sheet over the at least a part of the periphery of the second side of the second metal sheet.

In an example, the at least part of the periphery of the first side of the third metal sheet comprises at least one hole and the at least part of the periphery of the second side of the second metal sheet comprises at least one protrusion. For the different embodiments, the at least one hole is represented by the reference numbers 21, 311, 421 and the at least one protrusion by the reference numbers 11, 312, 322, 412, 422.

In an example, the at least one protrusion comprises at least one guidance pin 11, and the at least one hole comprises at least one cut-out (21).

In an example, step b) comprises locating the at least one guidance pin in the at least one cut-out.

In an example, the at least one protrusion comprises at least one bendable locking feature, and the at least one hole comprises at least one slit. For the different embodiments, the at least one bendable locking feature is represented by the reference numbers 312, 322, 412, 422 and the at least one slit by the reference numbers 311, 421.

In an example, step b) comprises inserting the at least one bendable locking feature through the at least one slit followed by bending the at least one bendable locking feature.

According to an example, the method comprises in an overlaying step 1030, also referred to as step c), overlaying at least a part of a periphery of a second side of the first metal sheet and at least a part of a periphery of a second side of the third metal sheet with one another to provide an overlapping area at a transition between the first metal sheet and the third metal sheet.

According to an example, step c) comprises overlaying the at least part of the periphery of the second side of the first metal sheet over the at least part of the periphery of the second side of the third metal sheet.

In an example, the at least part of the periphery of the second side of the first metal sheet comprises at least one hole and the at least part of the periphery of the second side of the third metal sheet comprises at least one protrusion. For the different embodiments, the at least one hole is represented by the reference numbers 21, 311, 421 and the at least one protrusion by the reference numbers 11, 312, 322, 412, 422.

In an example, the at least one protrusion comprises at least one guidance pin 11, and the at least one hole comprises at least one cut-out 21.

In an example, step c) comprises locating the at least one guidance pin in the at least one cut-out.

In an example, the at least one protrusion comprises at least one bendable locking feature, and wherein the at least one hole comprises at least one slit. For the different embodiments, the at least one bendable locking feature is represented by the reference numbers 312, 322, 412, 422 and the at least one slit by the reference numbers 311, 421.

In an example, step c) comprises inserting the at least one bendable locking feature through the at least one slit followed by bending the at least one bendable locking feature.

In an example, the at least part of the periphery of the second side of the third metal sheet is shaped with an indentation 33.

In an example, at least one periphery of the second metal sheet overlaid by a periphery of first metal sheet and/or overlaid by a periphery of the third metal sheet comprises a bended step region.

In an example, the compartment comprises fourth, five and sixth metal sheets that are arranged one to the other according to any of the examples described above applying to the first, second and third metal sheets. Furthermore, the first, second and third metal sheets are arranged with corresponding ones of the fourth, fifth and sixth metal sheets according to any of the examples described above.

According to an example, the method comprises fixing the plurality of metal sheets one to the other by welding at least one spot 80 at the transition between adjoining metal sheets.

According to an example, rendering the compartment gas tight comprises applying a welded line 70 along the transition between adjoining metal sheets.

In an example, at least one of the plurality of metal sheets comprises at least one opening.

In an example, one metal sheet comprises one opening 122 and another metal sheet comprises three openings 132 and a further metal sheet comprises three openings 142.

Fig. 3 shows an example of a circuit breaker module 210 for a medium voltage gas insulated switchgear. The circuit breaker module is gas and pressure tight and is one of the compartments of the medium voltage gas insulated switchgear. The circuit breaker comprises a compartment 100 with one metal sheet having one opening and with two further metal sheets that each have three openings - in total there can be six metal sheets. The circuit breaker also comprises three switching poles 212, three first conductors 220, three second conductors 250, three first bushings 230, three second bushings 240, and an assembly plate 215. The assembly plate closes the opening 122 in one metal sheet. The three switching poles are connected to a first face of the assembly plate. The first face of the assembly plate faces towards the inside of the compartment. Each bushing of the three first bushings is located at a corresponding opening of the three openings 132 in a second metal sheet. Each bushing of the three second bushings is located at a corresponding opening of the three openings 142 in a third metal sheet. Each conductor of the three first conductors is connected to a first state connection point 214 of corresponding ones of the three switching poles. Each conductor of the three first conductors is also connected to corresponding ones of the three first bushings, thereby connecting the switching poles to the bushings. Each conductor of the three second conductors is connected to a second state connection point 213 of corresponding ones of the three switching poles. Each conductor of the three second conductors is connected to corresponding ones of the three second bushings, thereby connecting the switching poles to the bushings.

According to an example, the circuit breaker comprises a drive 211. The drive is fixed to a second face of the assembly plate that faces away from the inside of the compartment.

According to an example, the assembly plate closes the opening to form a gas tight seal.

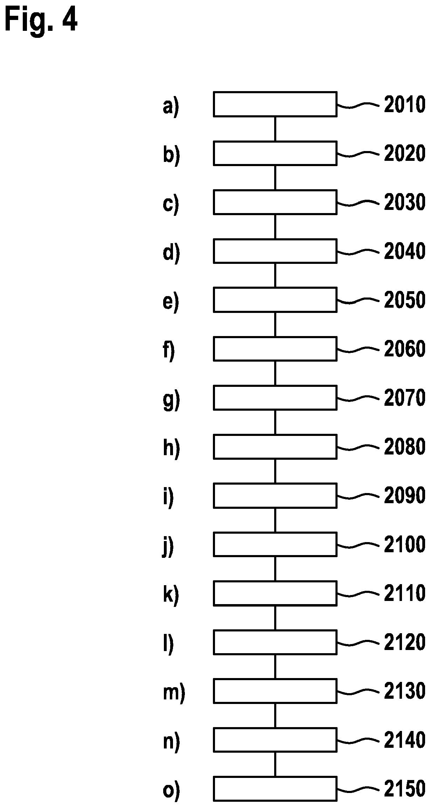

Fig. 4 shows a method 2000 of manufacturing a circuit breaker module for a medium voltage gas insulated switchgear in its basic steps. The circuit breaker module is gas and pressure tight and is one of the compartments of the medium voltage gas insulated switchgear. The method comprises:
a) providing 2010 a compartment 100, the compartment has one metal sheet having one opening and two further metal sheets that each have three openings - in total there can be six metal sheets;
b) providing 2020 three switching poles 212;
c) providing 2030 three first conductors 220;
d) providing 2040 three second conductors 250;
e) providing 2050 three first bushings 230;
f) providing 2060 three second bushings 240; and
g) providing 2070 an assembly plate 215;
h) connecting 2080 the three switching poles to a first face of the assembly plate;
i) locating 2090 the each bushing of the three first bushings is located at a corresponding opening of the three openings 132 in a metal sheet;
j) locating 2100 the each bushing of the three second bushings is located at a corresponding opening of the three openings 142 in a second metal sheet;
k) connecting 2110 each conductor of the three first conductors to a first state connection point 214 of corresponding ones of the three switching poles;
l) connecting 2120 each conductor of the three first conductors to corresponding ones of the three first bushings;
m) connecting 2130 each conductor of the three second conductors to a second state connection point 213 of corresponding ones of the three switching poles;
n) connecting 2140 each conductor of the three second conductors to corresponding ones of the three second bushings;
o) closing 2150 the opening 122 in a third metal sheet with the assembly plate, wherein the first face of the assembly plate faces towards the inside of the compartment.

In this manner, after constructing the compartment and installing components to form the circuit breaker, the compartment can then be made gas tight, comprising welding along the transition between adjoining, overlapping, metal sheets and where the internal components are protected from hot gases and metal particles.

In an example, the method comprises fixing a drive 211 to a second face of the assembly plate that faces away from the inside of the compartment.

According to an example, the method comprises forming a gas tight seal around the opening in the third metal plate with the assembly plate.

The transitions between the six metal plates can then be welded, whilst the components inside are protected, to form an overall gas tight seal.

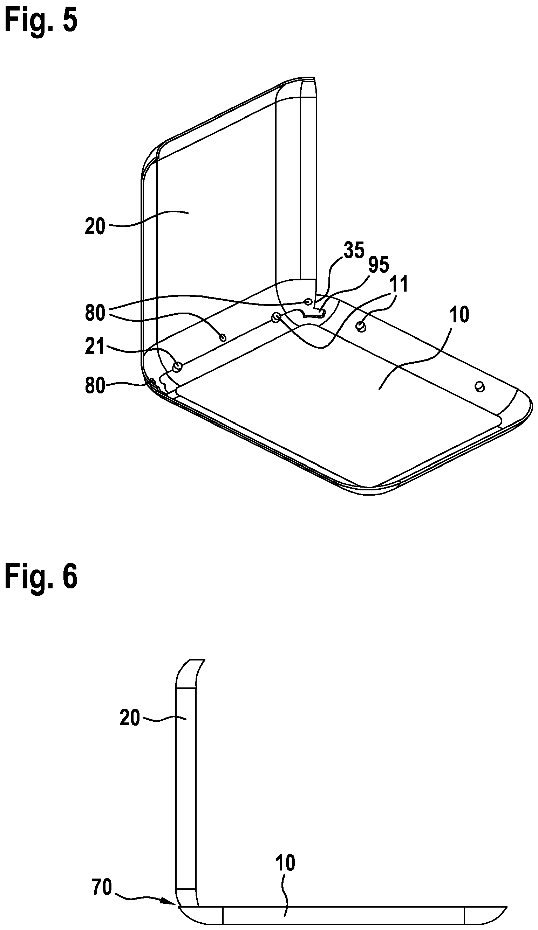

Figs. 5-20 show steps in the general assembly procedure of a compartment for a medium voltage gas insulated switchgear. The compartment is gas and pressure tight and is one of the compartments of the medium voltage gas insulated switchgear. Also shown is the general assembly procedure for a circuit breaker module for a medium voltage gas insulated switchgear. The circuit breaker module is gas and pressure tight and is one of the compartments of the medium voltage gas insulated switchgear.

Figs. 5 and 6 show the first step of a general assembly procedure. A second wall 20 is added to a first wall 10. The walls 10, 20 consist of sheet metal plates that were shaped in the required way e.g. by using hydroforming or deep drawing. The walls 10, 20 are formed in a way that the outside of the second sheet lays tangentially on the inside of the first sheet, so that an overlapping area 35 is created at the transition between the walls. A welding line 70 can be placed at the line where 10 and 20 touch each other at their outer surfaces. The release of hot gases and metallic particles from the welding to the inside of the compartment is significantly reduced due to the shielding effect of the overlapping area. The welding line 70 is designed to form a gas-tight seal.

Guidance pins 11 and corresponding cut-outs 21 are useful for the alignment of the two walls 10, 20 prior to the application of the welding line. Also outer jigs can be used here to fix the walls prior to welding. The guidance pins 11 can e.g. be welded onto the inner side of the wall 10 prior to the assembly procedure of the compartment.

Alternatively, the walls of wall segements ca be fixed in position with some few fixation means, for example rivets, before the final welding step.

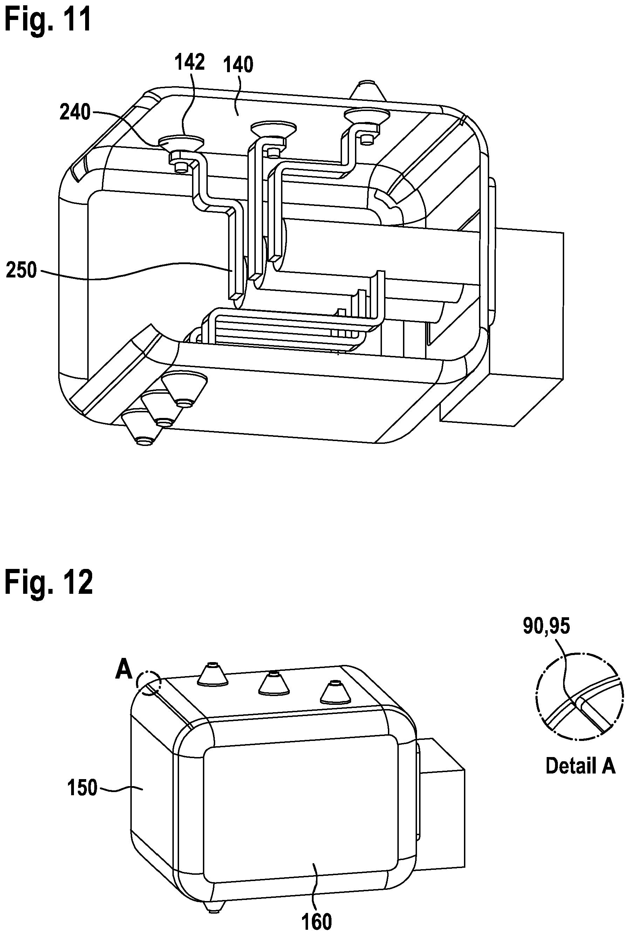

Alternatively, the two walls 10, 20 can be fixed to each other only with welding spots 80 in this step of the assembly. The locations of the welding spots are in the area 35 where the walls 10, 20 overlap or in the area where the welding line 70 will be added later on. The closing feature 95 is described with Fig. 12.

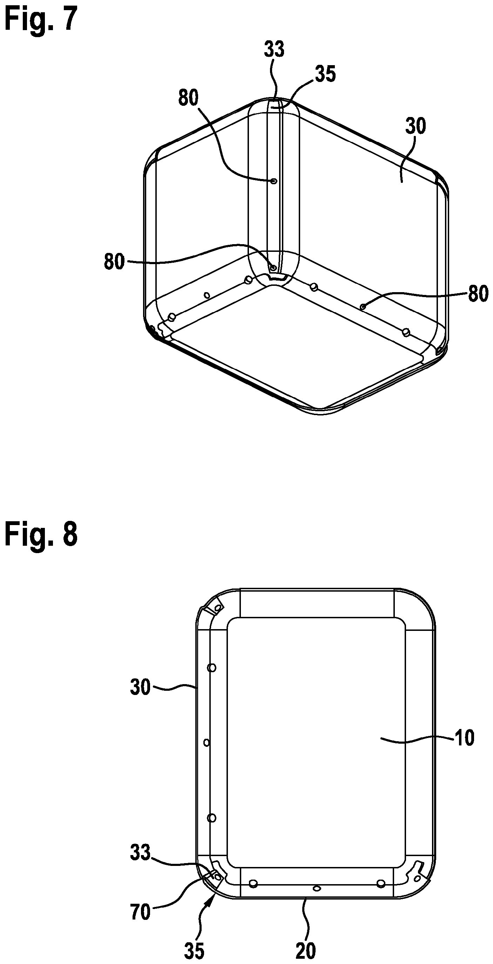

Fig. 7 shows the addition of the third wall 30 in the same way. Wall 30 is shaped with an indentation 33 so that the outer surface of wall 30 lays tangentially on the inner surface of wall 20 in the area of the indentation 33. The sectional view of Fig. 8 shows where a welding line 70 can close the gap between the walls 10, 20 in the region of the indentation 33 in a gastight and mechanically stable way.

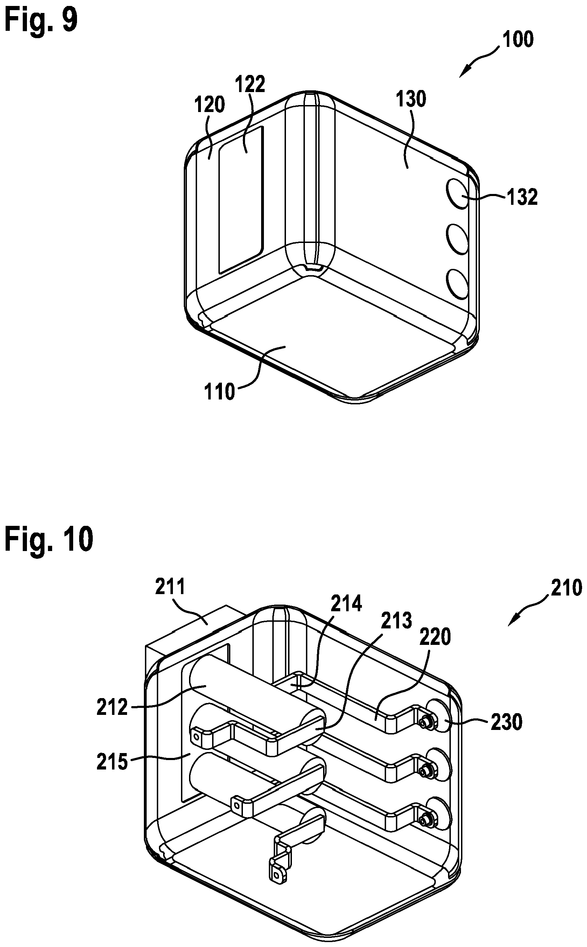

Figs. 9 to 12 show the assembly process for a CB compartment 100. In Fig. 9 the first three walls 110, 120 and 130 are assembled using the principles described above. The wall 120 has an opening 122 for the later-on insertion of the components to make a CB module. The wall 130 has three openings 132 for the insertion of three bushings 230.

The next production step in this example is the manufacture of the CB-module 210, as it is shown in Fig. 10. The CB-module 210 consists basically of three switching poles 212, which may e.g. include vacuum interrupters, a drive 211 and an assembly plate 215. Each of the switching poles 212 provides a top connection point 213 and a centre connection point 214, where an external electrical circuit can be connected. Depending on the state of the drive 211, which can be ON or OFF, the switching pole internally connects or disconnects the top and the center connection points to close or open an external electrical MV circuit. The assembly plate 215 is the mechanical fixation plane for the poles 212 and the drive 211. Further, the assembly plate 215 is used to close the opening 122 in the wall 120 in a gas tight way, e.g. by using a screw-connection with an O-ring and several screws, or by being welded onto the wall 120.

Bushings 230 are inserted into the openings 132, and this insertion can also be done prior to the fixation of the wall 130 to the compartment 100.

Conductors 220 are installed for the electrical connection of the three centre connection points 214 to the three bushings 230 to establish an electrical three phase connection of one side of the CB to the outside of the CB compartment. The conductors 220 are e.g. fixed by screws. Fig. 11 shows the CB compartment with the fourth wall 140 added. Further, three bushings 240 are added into the openings 142 and three conductors 250 were added for the electrical three phase connection of the other side of the CB to the outside of the CB compartment. The conductors 220 are e.g. fixed by screws. Fig. 12 shows the CB compartment with the remaining fifth wall 150 and sixth wall 160 added. The welding of the compartment can now be completed so that it will be gastight afterwards. Due to the fact that the regions of the welding lines are covered towards the inside of the compartment by the overlapping areas, the internal components, e.g. the CB-module, the bushings and the conductors, are not exposed to hot gases or metallic particles from the welding.

The locations 90 where three walls meet, usually in the corners of the compartment, may require special attention. As the walls cannot be formed with infinitely small bending radii, a small gap will remain at the locations 90. In case of need, the inner components can be further shielded against hot gases or metallic particles from the welding by the optional closing feature 95, which is just an additional extension of the wall 20.

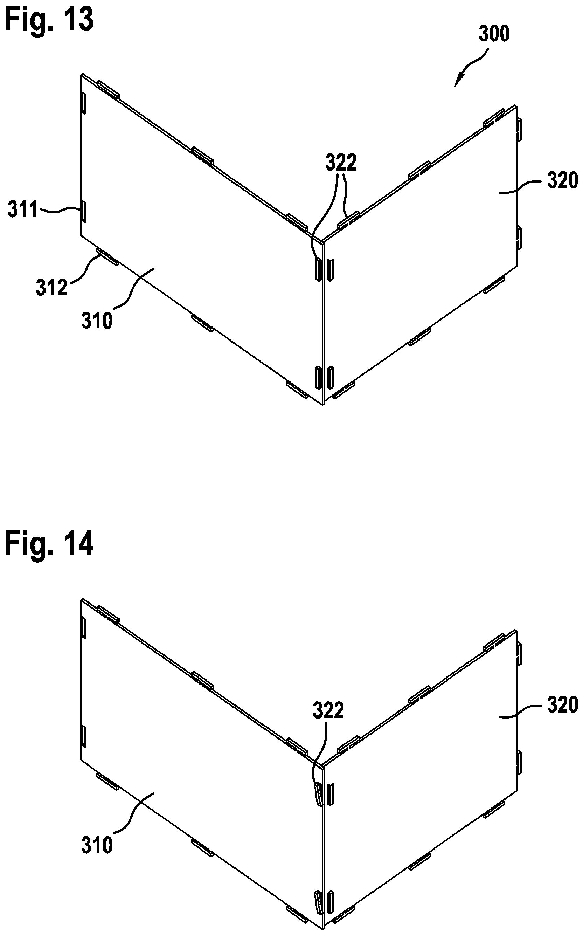

An alternative and simplified way for the alignment of several walls and the fixation during some steps of the assembly process prior to the gastight welding of the compartment 300 is shown in Figs. 13 to 16. Here, the side walls 310 to 360 have slits (e.g. 311) and bendable locking features (e.g. 312). For the assembly, the originally flat bendable locking features, e.g. 322 in Fig. 13 of one wall, e.g. 320 in Fig. 13, are inserted horizontally, from the right to the left, into the slits, e.g. 311 of the neighbouring side wall, e.g. 310. Then, the locking features 322 are being bended as shown in Fig. 14 for locking the side walls 310, 320 to each other. The bending can be performed either manually or by using a tool, in principle a lever. Depending on the mechanical stability that is provided by this locking and depending on the mechanical stability that is required for the following steps of the production, the gastight welding of the walls 310 and 320, including the regions of the slits and locking features, can be performed directly after this step of the production or later.

The mechanical stability of the mechanical locking can be increased by the addition of welding spots, so that the final, gastight welding can be performed at a later step in the production phase, ideally at the end of the assembly of all walls, so that the process of gastight welding has to be performed only once.

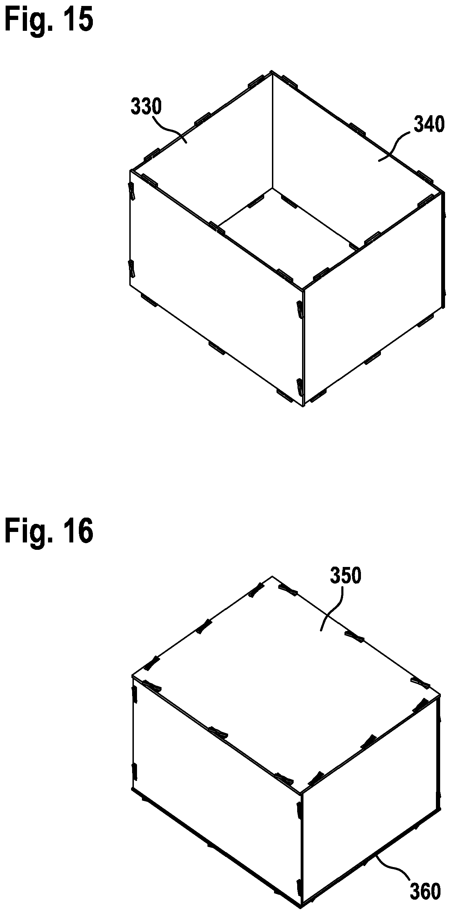

In the same way, the third and fourth side wall 330, 340 are added as shown in Fig. 15. These walls can also be inserted horizontally from the right to the left, considering that 330 is inserted first. Finally, the fifth and sixth walls 350, 360, are added vertically as shown in Fig. 16. For the technique of the slits and locking features it can be important to keep a certain sequence of the assembly in mind, so that it is mechanically possible to insert the next side wall. If for example side walls 310 and 360 would already be connected, it is not then possible to insert side wall 320, as the direction of insertion is defined by the position of the slits and locking features and would have to be in the same time vertically, to connect 320 with 360, and horizontally, to connect 320 with 310.

The side walls 310 to 360 are flat and they can therefore be manufactured in a very simple way, e.g. just by laser-cutting. Except for the locking features during the assembly process, no bending is required.

Further details of the compartment, for example the openings in the walls, bushings, conductors that are used as part of manufacturing a CB module, are not shown in these figures as these details are equivalent to what is shown in Figs. 5-12.

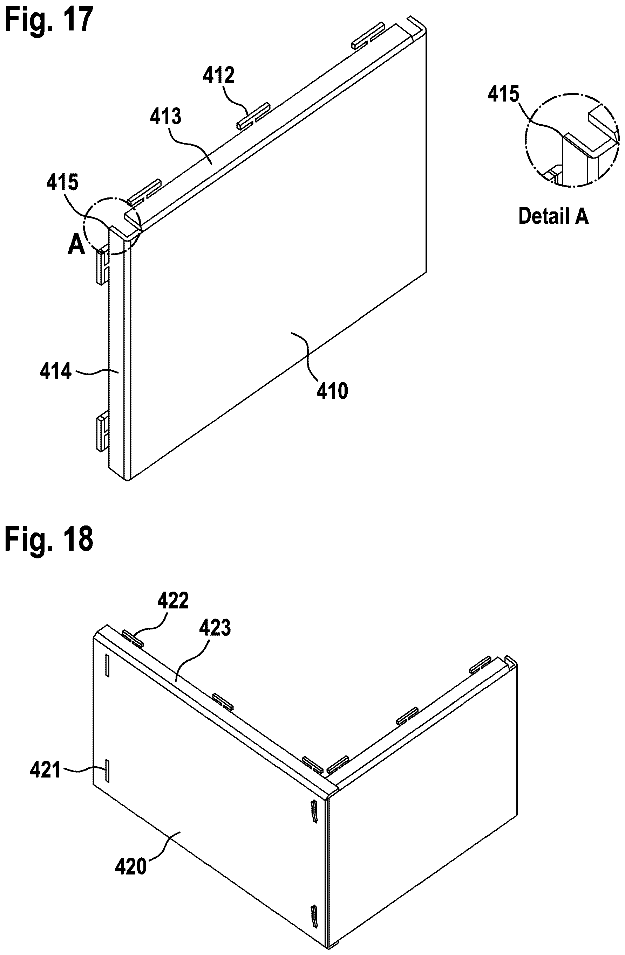

Another way for the assembly of a compartment 400 is shown in Figs. 17-20. The first wall 410 provides two bended steps 413, 414 to realise an overlapping region to shelter the internal components from the hot gases and metallic particles that are generated due to the welding process. Bended steps 413 and 414 do not extend the entire width and height of the wall 410 to avoid an intersection with the second side wall 420 and its step 423, as can be seen from figure 14. Further, a small chamfer 415 is provided at the ends of 414 to avoid an intersection with the inner bending radius of step 423. The further assembly procedure is equivalent to the procedure of the compartment 300 that was described above. The side walls 410 to 460 are generally flat with some bending required, and they can therefore be manufactured in a relatively simple way, e.g. by laser-cutting and edge bending.

Alternatively, a module with six side walls can also be made from less than six pieces of sheet metal when neighbouring sides are prefabricated in one step so that one ore more welding lines can be avoided.

### Reference Numbers

1 Compartment
10 First wall
11 Guidance pin
20 Second wall
21 Cut-out in 20 for latching with 11
30 Third wall
33 Indentation in 30
35 Overlapping area
70 Welding line
80 Welding spot
90 Point where three side walls come together
95 Closing feature for 90
100 CB compartment
110 First wall of 100
120 Second wall of 100
122 Opening in 120 for insertion of CB-module
130 Third wall of 100
132 Openings in 130 for installation of bushings 230
140 Fourth wall of 100
142 Openings in 140 for installation of bushings 240
150 Fifth wall of 100
160 Sixth wall of 100
210 CB-module
211 Drive of 210
212 Switching pole of 210
213 Top connection point of 212
214 Centre connection point of 212
215 Assembly plate of 210
220 Conductor
230 Bushing for installation in the third side wall
240 Bushing for installation in the fourth side wall
300 Compartment acc. to a first alternative assembly method
310 First wall of 300
311 Slit in 310
312 Bendable locking feature of 310
320 Second wall of 300
322 Bendable locking feature of 320
330 Third wall of 300
340 Fourth wall of 300
350 Fifth wall of 300
360 Sixth wall of 300
400 Compartment acc. to a second alternative assembly method
410 First wall of 400
412 Bendable locking feature of 410
413 First bended step of 410
414 Second bended step of 410
415 Chamfer of 414
420 Second wall of 400
421 Slit in 420
422 Bendable locking feature of 420
423 Bended step of 420
430 Third wall of 400
440 Fourth wall of 400
450 Fifth wall of 400
460 Sixth wall of 400

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfill the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. Medium voltage gas insulated switchgear with several compartments, wherein a pressure and gastight compartment, containing the vacuum-interrupters,
**characterized in that**
the aforesaid pressure and gastight compartment is made of several metal sheets (10, 20, 30, 110, 120, 130, 140, 150, 160, 310, 320, 330, 340, 350, 360, 410, 420, 430, 440, 450, 460), wherein the metal sheets are provided with overlapping areas at the edges (35), at which the several metal sheet are connected together, in such, that the concerning overlapping areas fits complementarily together.

2. Medium voltage gas insulated switchgear, according to claim 1,
**characterized in that**
the metal sheets are provided in the aforesaid complementary overlapping areas with furthermore complementary fixation means (11, 21, 311, 312, 322, 412, 421, 422).

3. Medium voltage gas insulated switchgear, according to claim 1 or 2,
**characterized in that**
the metal sheets are welded together (70), in order to result a gastight compartment.

4. Medium voltage gas insulated switchgear, according to one of the aforesaid claims, **characterized in that**
the metal sheets are structured 3-dimensionally at the edges.

5. Medium voltage gas insulated switchgear, according to claim 4,
**characterized in that**
the metal sheets are pre-manufactured by hydroforming.

6. Medium voltage gas insulated switchgear, according to one of the aforesaid claims, **characterized in that**
at least one of the metal sheets are provided with 3-dimensional linear, and/or bent lined or circular and/or corrugated lined integral structure for stiffening.

7. Method for manufacturing a gas and pressure tight compartment for a medium voltage gas insulated switchgear with several compartments, wherein the gas and pressure tight compartment contains the vacuum-interrupters, **characterized in that** the method comprises
assembling first metal sheets, wherein the metal sheets are provided with overlapping areas at the edges (35), at which the first metal sheets are connected together, in such, that the concerning overlapping areas fits complementarily together, installing the vacuum interrupters and the bushings, and then assembling the last metal sheets, and welding the metal sheets together to form the gas and pressure tight compartment.

8. Use of a gas and pressure tight compartment, manufactured by the method according to claim 7.
